# EUROPEAN PATENT SPECIFICATION

(11) **EP 0 460 768 B1**
(45) Date of publication and mention of the grant of the patent: **07.09.1994**
(21) Application number: 91201402.4
(22) Date of filing: 06.06.1991
(51) Int. Cl.: B60J 7/00

(54) **Open roof construction for a vehicle**
Konstruktion eines offenen Daches für ein Fahrzeug
Construction de toit ouvrant pour véhicule

(30) Priority: 08.06.1990 NL 9001306
(43) Date of publication of application: 11.12.1991
(73) Proprietor: VERMEULEN-HOLLANDIA OCTROOIEN II B.V., NL-2031 EA Haarlem (NL)
(72) Inventor: Huyer, Johannes Nicolaas, NL-1991 BN Velserbroek (NL)
(74) Representative: de Bruijn, Leendert C.

(56) References cited:
- DE-A- 3 606 415
- DE-A- 4 030 058
- GB-A- 2 094 723
- GB-A- 2 206 547

## Description

The invention relates to an open roof construction according to the preamble of claim 1.

In a known open roof construction of this type (e.g. GB-A-2 094 723), which is constructed as a so called tilting sliding roof, having a transparent panel and sun shade as upper and lower closure means, there is provided a transverse water gutter serving as movable water receiving means. Said water gutter is positioned between the sun shade and the fixed roof and is lying under the rear edge of the roof opening when the panel is in its foremost positions. To displace the panel rearwardly under the fixed roof, the rear edge thereof is lowered onto the water gutter, whereafter the lowered panel together with the water gutter is slid rearwardly.

The disadvantage of said construction is that the water gutter adversely affects the built-in height of the open roof construction.

The object of the present invention is to provide an open roof construction of the type mentioned in the preamble, in which this disadvantage is removed in an effective way.

For this purpose the open roof construction according to the invention has the features of the characterizing portion of claim 1.

By constructing the lower closure means proper as movable water receiving means it is possible to omit a separate water gutter, making it possible to save built-in height on the one hand and to obtain a more simple construction on the other hand.

A simple discharge of water received by the lower closure means to the lateral water receiving means may be obtained if the lower closure means is slightly sloping in transverse direction from its longitudinal centre and debouches with its side edges above the lateral stationary water receiving means.

Herein it is possible that the lateral stationary water receiving means include on each side a gutter-shaped stationary guide rail and a water gutter lying outwardly thereof under the respective side edge of the roof opening and communicating with the guide rail, wherein the lower closure means debouches above the stationary guide rail.

When it would be undesirable to allow water to enter the guide rail, then it would of course also be possible to provide a water gutter or another stationary water receiving means inwardly of the guide rail and adapted to discharge the received water in one way or another.

In a favourable and simple embodiment the lower closure means is guided near its side edges on an upper guide flange.

As a consequence thereof it is easy to allow the lower closure means to debouch at its side edges above the lateral water receiving means.

An advantageous embodiment according to the invention is characterized in that the lower closure means is provided at its side edges with sliding pieces which are guided on the upper surface of the lower closure means and extending around the respective side edge of the lower closure means downwardly and engaging around the outwardly turned flange of the stationary guide rail, the sliding pieces having a configuration so as to be adapted to discharge water.

These features enable a very simple assembly of the lower closure means without adversely affecting the water receipt or discharge.

The assembly of the lower closure means is further simplified and a play-free guide of the sun shade is obtained if at least one of the sliding pieces is loaded inwardly by a spring element.

A further development of the invention is characterized in that the upper surface of the lower closure means is provided with a plurality of transverse upright edges distributed along the length of the lower closure means.

These upright edges divide the water receiving upper surface of the lower closure means longitudinally into compartments preventing that when a vehicle suddenly brakes leakage water which is for instance present on the rear side of the lower closure means is flowing rapidly to the front and is thrown over the front edge of the lower closure means into the interior of the vehicle. Of course also other means to prevent this may be provided, such as a rearwardly extending splash rim on the front side of the lower closure means or a perforated plate on the upper surface of the lower closure means.

In the preferred embodiment the upper closure means is a transparent panel, and the lower closure means being a sun shade.

The invention will hereafter be elucidated with reference to the drawing schematically showing an embodiment of the open roof construction according to the invention by way of example.

Fig. 1 is a schematic plan view of an embodiment of the open roof construction according to the invention, built-in below the fixed roof of a vehicle.

Fig. 2 is a very schematic longitudinal sectional view of the open roof construction of fig. 1.

Fig. 3 is an enlarged perspective exploded view of a portion of the open roof construction of fig. 1.

Fig. 4, 5 are sectional views along the line IV-IV and V-V respectively of fig. 3.

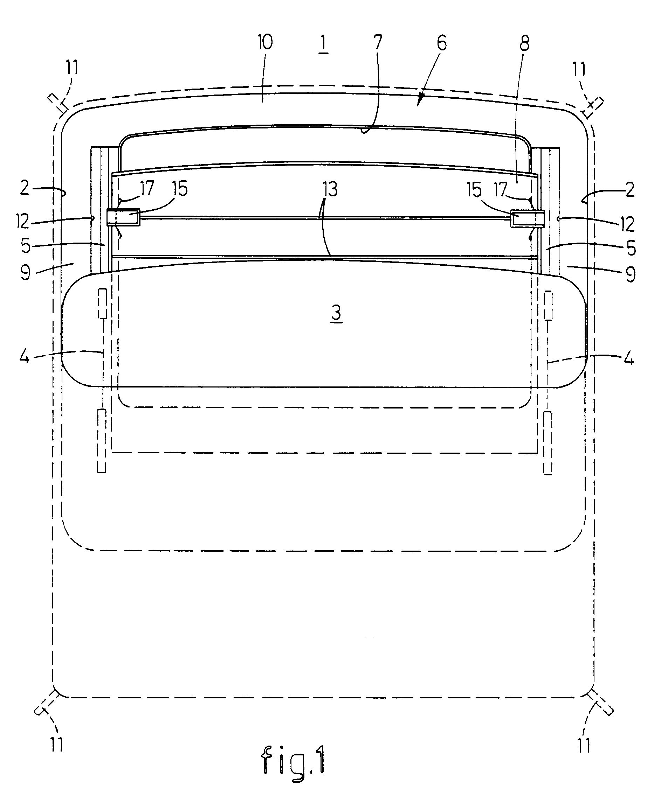

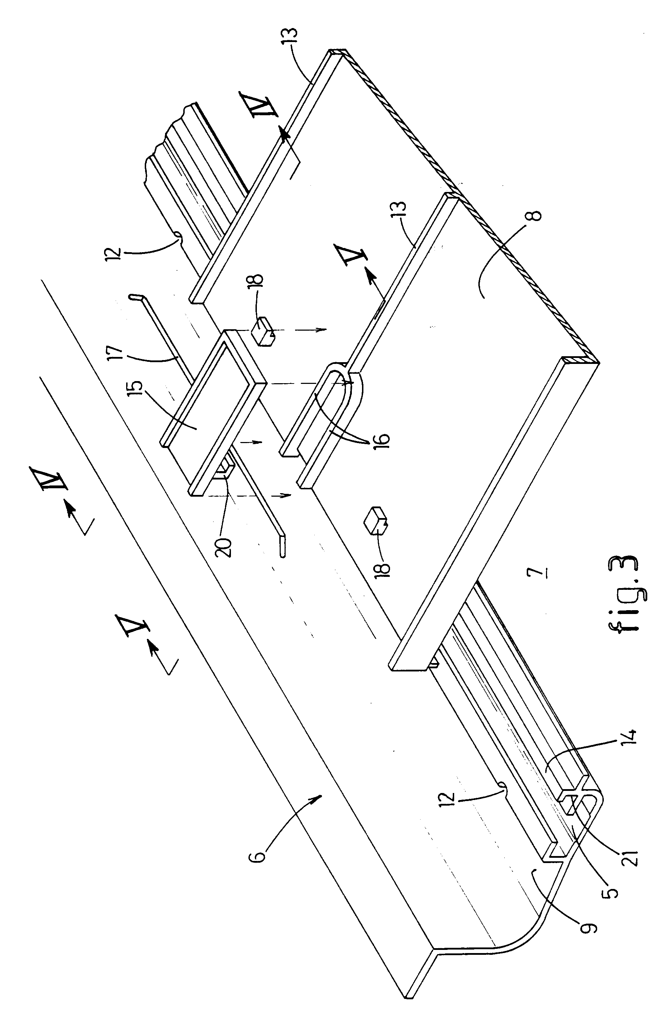

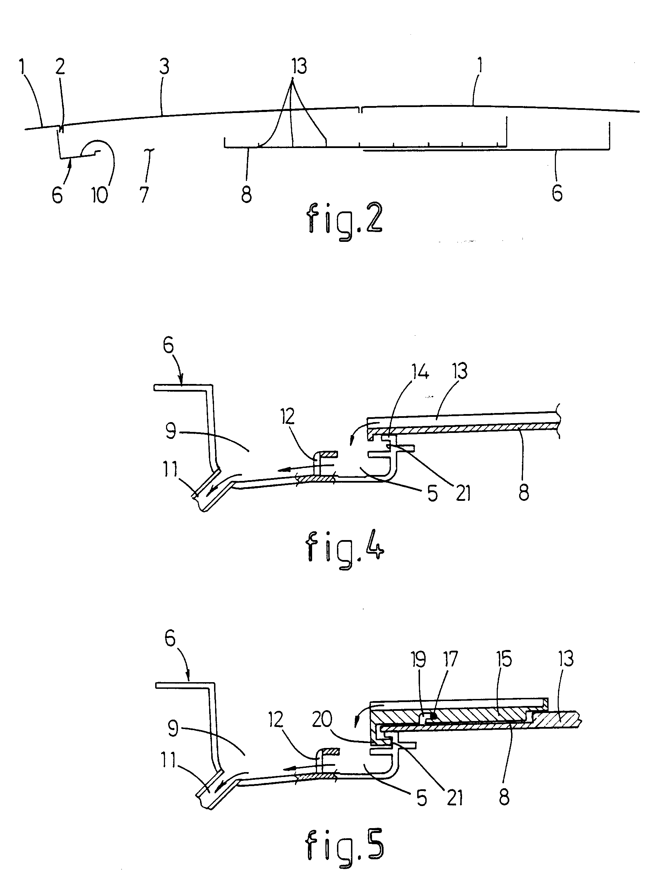

The drawing shows an embodiment of the open roof construction according to the invention by way of example, which is adapted to be mounted under the fixed roof 1 of the vehicle, which is provided with a roof opening 2. In this embodiment the open roof construction is a so called tilting sliding roof, of which a panel 3 may be moved from its closed position in the roof opening 2 (see fig. 2) to a rearwardly and upwardly inclining venting position (not shown) on the one hand, and first downwardly and then rearwardly under the fixed roof 1 of the vehicle on the other hand (see fig. 1). The panel 3 is made of tinted glas or another at least partially transparent material and is adjustably supported by means of an adjusting mechanism 4 indicated very schematically.

The elements of the adjusting mechanism 4 are guided in a stationary guide rail or stationary guide section 5 provided on both sides of the roof opening 2 on or as an integrated part of a frame 6 of the open roof construction.

Near the front side of the frame 6 is formed a passage opening 7 therein which, in the mounted condition of the open roof construction, is lying substantially under the roof opening 2. The passage opening 7 is closable by means of a sun shade 8 which is slidable back and forth below the panel 3 between a foremost position in which it closes the passage opening 7 and a rearmost position in which it opens the passage opening and consequently also the roof opening 2 for the greater part.

According to the invention the sun shade 8 is constructed, in a manner described in further detail later on, as movable water receiving means for receiving any leakage water leaking in between the panel 3 and the rear edge of the roof opening 2 of the fixed roof 1. For the same purpose there are provided water gutters 9 extending longitudinally at the side edges of the frame 6 under the side edges of the roof opening 2 and a water gutter 10 extending transversely at the front edge of the frame 6 below the front edge of the roof opening 2. To discharge the water from the water gutters 9 and 10 there are provided outlet pipes 11 at the corners of the frame 6, to which plastic hoses (not shown) connect adapted to discharge leakage outwardly of the body of the vehicle.

As mentioned before, the sun shade 8 is adapted to receive leakage water at the rear edge of the roof opening 2 and the panel 3 respectively. For this purpose any portion of the sun shade 8 should be positioned under the rear edge of the roof opening 2 when the panel 2 is in a closed position or in the venting position. In order to be able to discharge the received leakage, the sun shade 8 is sloping from its longitudinal centre sidewardly, while the side edges of the sun shade 8 debouch above the respective guide rail 5 of the frame 6. The guide rail 5 communicates with the respective water gutter 9 at several positions, for instance by means of passage holes 12. Leakage received by the sun shade 8 is consequently allowed to flow away from the frame via the guide rails 5 and the water gutters 9 through the outlet pipes 11.

As is particularly shown in fig. 1-3 there are provided on the upper surface of the sunshade 8 a plurality of transverse upright edges or ribs 13 distributed along the length of the sun shade 8 and dividing the water receiving surface of the sunshade 8 longitudinally into a plurality of compartments which should prevent that, when the vehicle decelerates suddenly, leakage present on the sun shade 8 is thrown over the front edge of the sun shade 8. Then, the upright edges 13 break the forward flow of the water so that the leakage water is kept in the respective compartment.

As is shown particularly in fig. 4 and 5, the sun shade 8 is supported on an upper guide flange 14 of the guide rail 5 and is retained at the guide rail 5 by means of resiliently mounted sliding pieces 15. As is shown also in fig. 3, each sliding piece 15 is slidably supported on and between ribs 16 on the sun shade 8 and is brased inwardly and downwardly by means of a spring means, in this case a rod spring 17. For this purpose the rod spring 17 engages with its ends under hooks 18 on the upper face of the sun shade 8 and in its centre into a recess 19 in the respective sliding piece 15. The rod spring 17 is then tensioned in the shape as shown in fig. 1.

On its outer end, the sliding piece 15 has an outwardly protruding hook-shaped guide means 20 extending downwardly around the side edge of the sun shade 8, engaging around the guide flange 14 and being supported by an outwardly turned guide face 21 of the guide rail 5. In this manner the sun shade is mounted to the guide rails 5 of the frame 6 free of play and may easily be brought into and out of engagement with the guide rail 5 by moving the sliding pieces 15 against the force of the rod spring 17.

The upper face of each sliding piece 15 is also configured in a manner to be adapted to discharge water such that water leaking onto the sliding piece 15 is allowed to flow into the guide rail 5 only. In this manner a correct discharge of leakage water on the sun shade 8 is ensured and any leakage water is prevented from entering the interior of the vehicle.

From the foregoing it will be clear that the water discharging sun shade 8 according to the invention takes care of a proper receipt and discharge of leakage at the rear edge of the roof opening 2 and also enables a very small built-in height of the open roof construction because a normally used water gutter between the sun shade 8 and the fixed roof 1 may be omitted.

The invention is not restricted to the embodiment show in the drawing and described herein before, which may be varied in different manners within the scope of the invention according to the claims. For instance it is possible to use the invention also in other types of open roof constructions, such as sliding roofs or so called spoiler roofs. Furthermore the invention is also useful in an open roof construction having a non-transparent upper closure means, such as a panel or flexible closure means, and a lower closure means, such as a cover or the like, wherein said lower closure means is then constructed as movable water receiving means. In this case the lower closure means may serve as a water receiving means not only under the rear edge of the roof opening but for instance also under the front edge thereof. A combination of a transparent closure means having an insulating screen or the like instead of a sun shade is conceivable.

## Claims

1. Open roof construction for a vehicle having an opening (2) in the fixed roof (1), comprising an upper closure means (3) which is displaceable between a closed position in which it closes the roof opening (2) and an open position in which it opens the roof opening (2) at least partially, a lower closure means (8) being movable below the upper closure means (3) between a first position under the roof opening (2) and a second position in which it opens said roof opening for the greater part; and water receiving means (5, 9, 10) under the peripheral edge of the roof opening (2) including stationary water receiving means (5, 9, 10) under a part of the peripheral edge of the roof opening (2) and movable water receiving means under another part of said peripheral edge of the roof opening (2), **characterized** in that the movable water receiving means is formed by the lower closure means (8) which, for this purpose, is lying, at least in the closed position of the upper closure means (3), with any portion under said another part of the peripheral edge of the roof opening (2), and the lower closure means (8) being adapted to discharge the received water into the stationary water receiving means (5, 9, 10).

2. Open roof construction according to claim 1, wherein the lower closure means (8) is slightly sloping in transverse direction from its longitudinal centre and debouches with its side edges above the lateral stationary water receiving means (5).

3. Open roof construction according to claim 2, wherein the lateral stationary water receiving means (5, 9) include on each side a gutter-shaped stationary guide rail (5) and a water gutter (9) lying outwardly thereof under the respective side edge of the roof opening (2) and communicating with the guide rail (5), and wherein the lower closure means (8) debouches above the stationary guide rail (5).

4. Open roof construction according to claim 2 or 3, wherein the lower closure means (8) is guided near its side edges on an upper guide flange (14).

5. Open roof construction according to claim 4, wherein the lower closure means (8) is provided at its side edges with sliding pieces (15) which are guided on the upper surface of the lower closure means (8) and extending around the respective side edge of the lower closure means (8) downwardly and engaging around the outwardly turned flange (14) of the stationary guide rail (5), the sliding pieces (15) having a configuration so as to be adapted to discharge water.

6. Open roof construction according to claim 5, wherein at least one of the sliding pieces (15) is loaded inwardly by a spring element (17).

7. Open roof construction according to one of the preceding claims, wherein the upper surface of the lower closure means (8) is provided with a plurality of transverse upright edges (13) distributed along the length of the lower closure means.

8. Open roof construction according to one of the preceding claims, constructed as sliding roof having a panel (3) being displaceable from the closed position downwardly and then backwardly under the fixed roof.

9. Open roof construction according to one of the preceding claims, wherein the upper closure means (3) is a transparent panel, and the lower closure means (8) being a sun shade.

## Patentansprüche

1. Dachöffnungskonstruktion für ein Fahrzeug mit einer Öffnung (2) in dem feststehenden Dach (1), mit einer oberen Verschlußeinrichtung (3) die zwischen einer Schließstellung, in welcher sie die Dachöffnung (2) schließt, und einer Öffnungsposition verschiebbar ist, in welcher sie die Dachöffnung (2) wenigstens teilweise öffnet, einer unteren Verschlußeinrichtung (8), die unter der oberen Verschlußeinrichtung (3) zwischen einer ersten Position unter der Dachöffnung (2) und einer zweiten Position bewegbar ist, in welcher sie die Dachöffnung zum größeren Teil öffnet, einer Wasseraufnahmeeinrichtung (5,9,10) unter dem Umfangsrand der Dachöffnung (2) mit einer stationären Wasseraufnahmeeinrichtung (5,9,10) unter einem Teil des Umfangsrandes der Dachöffnung (2) und einer bewegbaren Wasseraufnahmeeinrichtung unter einem anderen Teil des Umfangrandes der Dachöffnung (2), dadurch gekennzeichnet, daß die bewegbare Wasseraufnahmeeinrichtung von der unteren Verschlußeinrichtung (8) gebildet wird, welche zu diesem Zweck wenigstens in der Schließposition der unteren Verschlußeinrichtung (3) mit einem Abschnitt unter dem anderen Teil des Umfangsrandes der Dachöffnung (2) liegt, wobei von der unteren Verschlußeinrichtung (8) das aufgefangene Wasser in die stationäre Wasseraufnahmeeinrichtung (5,9,10) ausgebbar ist.

2. Dachöffnungskonstruktion nach Anspruch 1, bei welcher die untere Verschlußeinrichtung (8) von ihrer Quermitte aus in Querrichtung leicht abfällt und mit ihren Seitenrändern oberhalb der seitlichen stationären Wasseraufnahmeeinrichtung (5) einmündet.

3. Dachöffnungskonstruktion nach Anspruch 2, bei welcher die seitliche stationäre Wasseraufnahmeeinrichtung (5,9) an jeder Seite eine rinnenförmige stationäre Führungsschiene (5) und eine Wasserrinne (9) aufweist, die außerhalb derselben unter dem entsprechenden Seitenrand der Dachöffnung (2) liegt und mit der Führungsschiene (5) in Verbindung steht, und bei welcher die untere Verschlußeinrichtung (8) oberhalb der stationären Führungsschiene (5) einmündet.

4. Dachöffnungskonstruktion nach Anspruch 2 oder 3, bei welcher die untere Verschlußeinrichtung (8) nahe ihrer Seitenränder an einem oberen Führungsflansch (14) geführt ist.

5. Dachöffnungskonstruktion nach Anspruch 4, bei welcher die untere Verschlußeinrichtung (8) an ihren Seitenrändern mit Gleitstücken (15) versehen ist, die auf der oberen Fläche der unteren Verschlußeinrichtung (8) geführt sind und sich um den betreffenden Seitenrand der unteren Verschlußeinrichtung (8) nach unten erstrecken und den nach außen abgewickelten Flansch (14) der stationären Führungsschiene (5) umgreifen, wobei die Gleitstücke (15) derart gestaltet sind, daß sie Wasser ausgeben können.

6. Dachöffnungskonstruktion nach Anspruch 5, bei welcher wenigstens eines der Gleitstücke (15) von einem Federelement (17) nach innen vorgespannt ist.

7. Dachöffnungskonstruktion nach einem vorangehenden Ansprüche, bei welcher die obere Fläche der unteren Verschlußeinrichtung (8) mit einer Mehrzahl von vertikalen Querrippen (13) versehen ist, die über die Menge der unteren Verschlußeinrichtung hin verteilt sind.

8. Dachöffnungskonstruktion nach einem der vorangehenden Ansprüche, konstruiert als Schiebedach mit einem Deckel (3), der aus der Schließposition heraus nach unten und dann nach hinten unter das feste Dach verlagerbar ist.

9. Dachöffnungskonstruktion nach einem der vorangehenden Ansprüche, bei welcher die obere Verschlußeinrichtung (3) ein transparentes Panel ist und die untere Verschlußeinrichtung (8) eine Sonnenblende ist.

## Revendications

1. Construction de toit ouvrant pour un véhicule ayant une ouverture (2) dans le toit fixe (1), comportant un moyen supérieur (3) de fermeture qui peut être déplacé entre une position fermée dans laquelle il ferme l'ouverture (2) du toit et une position ouverte dans laquelle il dégage l'ouverture (2) du toit au moins partiellement, un moyen inférieur (8) de fermeture mobile au-dessous du moyen supérieur (3) de fermeture entre une première position au-dessous de l'ouverture (2) du toit et une seconde position dans laquelle il dégage ladite ouverture du toit sur la plus grande partie ; et des moyens (5, 9, 10) de réception d'eau sous le bord périphérique de l'ouverture (2) du toit comprenant des moyens fixes (5, 9, 10) de réception d'eau sous une partie du bord périphérique de l'ouverture (2) du toit et des moyens mobiles de réception d'eau sous une autre partie dudit bord périphérique de l'ouverture (2) du toit, caractérisée en ce que les moyens mobiles de réception d'eau sont formés par le moyen inférieur (8) de fermeture qui, à cet effet, s'étend, au moins dans la position fermée du moyen supérieur (3) de fermeture, avec une partie quelconque au-dessous de ladite autre partie du bord périphérique de l'ouverture (2) du toit, et le moyen inférieur (8) de fermeture étant destiné à décharger l'eau reçue dans les moyens fixes (5, 9, 10) de réception d'eau.

2. Construction de toit ouvrant selon la revendication 1, dans laquelle le moyen inférieur (8) de fermeture est légèrement en pente dans une direction transversale à partir de son centre longitudinal et débouche par ses bords latéraux au-dessus des moyens latéraux fixes (5) de réception d'eau.

3. Construction de toit ouvrant selon la revendication 2, dans laquelle les moyens latéraux fixes (5, 9) de réception d'eau comprennent, sur chaque côté, un rail fixe (5) de guidage en forme de gouttière et une gouttière (9) à eau s'étendant à l'extérieur du rail au-dessous du bord latéral respectif de l'ouverture (2) du toit et communiquant avec le rail (5) de guidage, et dans laquelle le moyen inférieur (8) de fermeture débouche au-dessus du rail fixe (5) de guidage.

4. Construction de toit ouvrant selon la revendication 2 ou 3, dans laquelle le moyen inférieur (8) de fermeture est guidé à proximité de ses bords latéraux sur un rebord supérieur (14) de guidage.

5. Construction de toit ouvrant selon la revendication 4, dans laquelle le moyen inférieur (8) de fermeture est pourvu, sur ses bords latéraux, de pièces coulissantes (15) qui sont guidées sur la surface supérieure du moyen inférieur (8) de fermeture et s'étendant autour du bord latéral respectif du moyen inférieur (8) de fermeture vers le bas, et s'engageant autour du rebord (14), tourné vers l'extérieur, du rail fixe (5) de guidage, les pièces coulissantes (15) étant configurées de façon à décharger l'eau.

6. Construction de toit ouvrant selon la revendication 5, dans laquelle au moins l'une des pièces coulissantes (15) est chargée vers l'intérieur par un élément à ressort (17).

7. Construction de toit ouvrant selon l'une des revendications précédentes, dans laquelle la surface supérieure du moyen inférieur (8) de fermeture est pourvue de plusieurs arêtes montantes transversales (13) réparties sur la longueur du moyen inférieur de fermeture.

8. Construction de toit ouvrant selon l'une des revendications précédentes, construite en tant que toit coulissant ayant un panneau (3) pouvant être déplacé depuis la position fermée, vers le bas puis vers l'arrière au-dessous du toit fixe.

9. Construction de toit ouvrant selon l'une des revendications précédentes, dans laquelle le moyen supérieur (3) de fermeture est un panneau transparent, et le moyen inférieur (8) de fermeture est un pare-soleil.
